# EUROPÄISCHE PATENTSCHRIFT

(11) **EP 1 234 158 B1**
(45) Veröffentlichungstag und Bekanntmachung des Hinweises auf die Patenterteilung: **27.08.2003**
(21) Anmeldenummer: 00940400.5
(22) Anmeldetag: 23.06.2000
(51) Int. Cl.: G01B 11/16, G01D 5/30

(54) **VERFORMUNGSAUFNEHMER**
DISTORTION DETECTOR
DETECTEUR DE DEFORMATION

(30) Priorität: 06.09.1999 DE 19942332
(43) Veröffentlichungstag der Anmeldung: 28.08.2002
(73) Patentinhaber: INNOtec Europe GmbH, 67551 Worms (DE)
(72) Erfinder: ROTTNER, Franz, D-67551 Worms (DE); PIEPER, Siegfried, D-67551 Worms (DE); WINKLER, Reinhard, D-14482 Potsdam (DE)
(74) Vertreter: Sartorius, Peter, Dipl.-Ing.
(86) Internationale Anmeldenummer: EP0005828
(87) Internationale Veröffentlichungsnummer: WO01018487

(56) Entgegenhaltungen:
- DE-A- 3 033 103
- DE-A- 19 711 964
- FR-A- 2 578 974
- US-A- 3 708 231
- US-A- 4 694 690

## Beschreibung

Die Erfindung bezieht sich auf eine Vorrichtung zum Erfassen verschiedener Zustände wie Verformungszustände, Bewegungen, Belastungszustände eines Bauteils mit einem Sender und einem Empfänger, die unabhängig voneinander, mit Abstand zueinander auf mindestens einem Bauteil angeordnet sind, sowie einer Auswerteeinheit.

Es ist bereits ein Aufnehmer von Verformungszuständen eines Bauteils aus der US 5 170 366 bekannt. Dieser Aufnehmer emittiert akustische Signale mittels eines im oder am Bauteil vorgesehenen Senders und empfängt diese durch einen an oder in einer anderen Stelle des Bauteils angeordneten Empfänger. Aus den verschiedenen Belastungszuständen des Bauteils, wie z. B. eine Verformung durch Dehnung, Stauchung oder Torsion, ergeben sich verschiedene Laufzeitunterschiede der akustischen Signale. Bei einer Dehnung des Bauteils sinkt die Ausbreitungsgeschwindigkeit, und bei einer Kompression bzw. Stauchung steigt die Ausbreitungsgeschwindigkeit der akustischen Signale. Um eine Korrelation zwischen den gemessenen Laufzeiten und der Bauteilbelastung zu erhalten, ist es notwendig, die möglichen Belastungszustände und damit die verschiedenen Laufzeiten zwischen Sender und Empfänger in einer Simulationsphase zu ermitteln. Zudem ist es notwendig, alle Parameter, - die einen Einfluß auf die Ausbreitungsgeschwindigkeit haben und nicht auf eine Belastung des Bauteils zurückzuführen sind, wie z. B. die Temperatur oder Störsignale, auszugleichen bzw. auszuwerten.

Aus der DE 197 11 964 A1 wird eine Vorrichtung zur Erfassung der Verformung eines C-Bogens gezeigt, bei der ein Laserstrahl durch den C-Bogen geführt, an einem Ende reflektiert und am Einstrahlende von einem Detektor erfaßt wird. Der Detektor bildet der Verformung des C-Bogens entsprechende elektrische Signale, die zur Bildkorrektur verwendet werden können. Diese Vorrichtung dient nicht der Aufnahme verschiedenster Verformungszustände beliebiger Körper, insbesondere nicht unter schwierigsten Einsatzbedingungen und kleinen Bauraumverhältnissen.

Aus der US 4, 694, 690 ist eine Vorrichtung zur Erfassung einer Relativbewegung zweier Körper, insbesondere zwischen einer Schwelle und einer Gleisschiene. Hierbei werden die unterschiedlichen Wellenlängen von Licht durch einen Filter unterschiedlich gefiltert bzw. geschwächt, d.h. je nach Position der Sender-Empfänger-Einheit zum dazwischen angeordneten Filter treten die verschiedenen Wellenlängen mit unterschiedlicher Intansität aus dem Filter aus auf den Empfänger. Die Verwendung dieser Vorrichtung zum Messen der Verformung der Schiene selbst unter schwierigsten Einsatzbedingungen und kleinen Bauraumverhältnissen wird hier nicht gezeigt.

Die US 3, 708, 231 zeigt eine Vorrichtung zum Erfassen von Winkeländerungen eines Bauteils, wobei das Reflexionsverhalten eines Lichtstrahls an einer geneigt verlaufenden, planen Oberfläche ausgewertet wird. Bauteilverformungen wie z.B. eine Biegung sind mit dieser Anordnung nicht zu erfassen. Die FR 2 578 974 betrifft eine Vorrichtung zum ermitteln einer Kraft bzw. der daraus resultierenden Bewegung. Hierbei ist innerhalb eines flexiblen Gehäuses ein Licht-Sender und ihm im Gehäuse gegenüber ein optischer Empfänger vorgesehen. Aufgrund der optischen Eigenschaft bzw. Charakteristik des sich , im Gehäuse ausbreitenden Lichtes ist die Detektion einer Verformung des Gehäuses möglich. Eine geringe, dynamische Relativbewegung zwischen Sender und Empfänger kann mit einer solchen Vorrichtung nicht erfaßt werden.

Der Erfindung liegt die Aufgabe zugrunde, einen Verformungsaufnehmer derart auszubilden und anzuordnen, daß eine schnelle und einfache Ermittlung verschiedener Belastungszustände eines Bauteils möglich wird.

Gelöst wird die Aufgabe erfindungsgemäß dadurch, daß der Sender eine fokussierte oder punktförmige elektromagnetische Welle oder eine fokussierte akustische Welle oder einen fokussierten Teilchenstrahl außerhalb des Bauteils zum Empfänger emittiert. Hierdurch wird erreicht, daß der Sender und der Empfänger über den Lichtstrahl miteinander in Wirkverbindung stehen, so daß z. B. Verformungen des Bauteils eine Auswirkung auf die relative Position zwischen Sender und Empfänger und damit auch auf den Verlauf des Lichtstrahls relativ zum Empfänger haben. Diese Vorrichtung eignet sich als Wägeeinrichtung, da von der Verformung eines Bauteils auf die wirkende Kraft geschlossen werden kann. Aber auch andere Einflußgrößen, die eine Verformung des Bauteils mit sich bringen, wie z. B. dynamische Lasten oder eine Unwucht, können ermittelt werden. Für eine solche Positionsbestimmung ist auch die Verwendung einer Druck- bzw. Schallwelle oder eines Wasserstrahls denkbar.

Vorteilhaft ist es hierzu auch, daß der Sender und der Empfänger über jeweils eine Aufnahme derart auf dem Bauteil angeordnet sind, daß eine Verformung des Bauteils äquivalent zur Positionsverschiebung der elektromagnetischen Welle oder des Lichtstrahls auf dem Empfänger ist. Somit führt jede Verformung des Bauteils zu einer Veränderung des Lichtstrahlverlaufs in Bezug auf den Empfänger. Diese Veränderung dient der Ermittlung der Bauteilverformung oder der Bauteilschwingung bzw. ist äquivalent zu dieser. Das bietet auch die Möglichkeit, über den Verformungszustand des Bauteils die Kraft zu erfassen, die zu der Verformung führt, d. h. es kann z. B. das Gewicht einer Last wie die eines Zuges auf einer unter seiner Last verformten Gleisschiene ermittelt werden. Es ist auch das dynamische Wiegen eines Zuges vorgesehen.

Eine zusätzliche Möglichkeit ist gemäß einer Weiterbildung, daß innerhalb des Strahlengangs des Lichtstrahls mindestens ein Reflektor oder eine Reflexionsfläche angeordnet ist und daß der Lichtstrahl über den Reflektor oder die Reflexionsfläche zum Empfänger hin gespiegelt wird, wobei der Reflektor über eine Aufnahme mit dem Bauteil verbunden ist. Hierzu ist es auch von Vorteil, daß der Sender und der Empfänger auf einer gemeinsamen Gehäuseseite gegenüber dem Reflektor oder der Reflexionsfläche angeordnet sind. Der Strahlengang des Lichtstrahls wird somit je nach Anzahl der Reflektoren um ein Zwei-, Vier- bzw. Mehrfaches verlängert. Die sich mit der Bauteilverformung ergebende Abweichung des Lichtstrahls wird somit um diesen Verlängerungsfaktor vergrößert, was zu einer erheblichen Auflösung der Bauteilverformung führt. Somit kann jede geringfügige Bauteilverformung aufgelöst und bestimmt werden. Die Anordnung des Reflektors auf dem Bauteil hat den Vorteil, daß die Sender-Empfänger-Einheit als Ganzes über eine separate Aufnahme auf dem Bauteil angeordnet ist.

Gemäß einer bevorzugten Ausführungsform der erfindungsgemäßen Lösung ist schließlich vorgesehen, daß der Empfänger eine lichtempfindliche Fläche wie einen PSD-Aufnehmer oder ein Bildverarbeitungselement aufweist und die lichtempfindliche Fläche mindestens eine Auflösung von 3000 d bis 6000 d gewährleistet. Dieser in der Wägetechnik übliche Wert wird aus dem Quotient der Längenverhältnisse von der maximal meßbaren Abweichung des Lichtstrahls auf der lichtempfindlichen Fläche und dem Durchmesser der kleinsten optischen Einheit bestimmt. Somit lassen sich die Abweichungen des reflektierten Lichtstrahls im Verhältnis zu seiner Ausgangsposition und damit die Bauteilverformung entsprechend der o. g. Auflösung bestimmen. Hierbei ist zu beachten, daß die Abweichung des Lichtstrahls aufgrund der mehrfachen Reflexion des Strahlengangs schon um den entsprechenden Faktor vergrößert ist.

Von besonderer Bedeutung ist für die vorliegende Erfindung, daß der Sender mindestens einen Lichtstrahl wie einen Laserstrahl emittiert. Somit ist es auch möglich, daß die Bauteilverformung mittels zwei oder drei sich in Frequenz und/oder Position unterscheidender Lichtstrahlen ausgewertet werden kann. Die Verwendung eines Laserstrahls ist im Hinblick auf die Streuung bzw. die Positionserkennung äußerst vorteilhaft. Die Verwendung eines anderen Mediums, wie z. B. Wasser, zur Erzeugung eines Strahlengangs ist auch denkbar.

Im Zusammenhang mit der erfindungsgemäßen Ausbildung und Anordnung ist es von Vorteil, daß der Sender, der Empfänger und der Reflektor in einem flexiblen Gehäuse angeordnet sind. Das Gehäuse dient dem Schutz des Strahlengangs vor äußeren Einflüssen. Eine Behinderung der Relativbewegungen zwischen den einzelnen Elementen aufgrund der Bauteilverformung wird durch die flexible Ausbildung des Gehäuses verhindert.

Im Hinblick auf die Strahlengangverlängerung ist es vorteilhaft, daß mindestens eine semitransparente Schicht innerhalb des Strahlengangs vom Sender zum Empfänger angeordnet ist. Somit wird der emittierte Lichtstrahl mit einem Teil seiner Intensität reflektiert, und mit dem anderen Teil seiner Intensität wird der Strahlengang weitergeführt. Somit wird ein Positionsbild des Strahlengangs auf dem Empfänger erreicht, dem verschiedene Auflösungsstufen der Bauteilverformung entsprechend der Anzahl der Reflexionen entnehmbar sind.

Vorteilhaft ist es hierzu auch, daß der Sender und/oder der Empfänger und/oder das Gehäuse rund oder rechteckförmig ausgebildet sind. Entsprechend der möglichen Bauteilverformung bzw. dem Einsatzgebiet kann somit eine optimale Ausnutzung der vorhandenen Flächen erreicht werden. Die runde Gehäuseform dient im wesentlichen der Verwendung des Aufnehmers in Form eines Bohrkerns bzw. als Bohrkernersatz. Dieser wird in eine Bohrung eingeführt bzw. durch diese aufgenommen, um die dortigen Bauteilverformungen zu ermitteln. Somit läßt sich der Aufnehmer z. B. in einem Fundament einsetzen, um die dortigen Verformungen bzw. Schwingungen zu ermitteln.

Von Vorteil ist es auch, daß dem Empfänger oder dem PSD-Aufnehmer eine Auswertelogik zur Bestimmung der Verformung des Bauteils zugeordnet ist. Die aus der Abweichung des reflektierten Lichtstrahls zugrunde liegende Bauteilverformung wird über die Auswertelogik ermittelt. Eine Verwendung des Aufnehmers als Wiegeglied ist somit auch möglich.

Im Zusammenhang mit der erfindungsgemäßen Ausbildung und Anordnung ist es von Vorteil, daß der Sender und der Empfänger gemeinsam auf einer Platte angeordnet sind, die über mindestens ein Klemmelement an ein Bauteil geklemmt ist, wobei das Klemmelement zwei spitze oder runde Anlageteile und mindestens eine mit der Platte korrespondierende Bohrung aufweist. Über diese Bohrungen wird das Klemmelement zum einen an die Platte und zum anderen an die Gleisschiene zur Anlage gebracht, so daß die Verformungen des Bauteils auf den Sender und den Empfänger übertragen werden. Die sich ergebende Anlagefläche ist hierbei linienförmig, wodurch eine nicht überbestimmte Lagerung erreicht wird. Aufwendige Bohrungen oder Klebungen am Bauteil werden somit vermieden.

Letztlich ist es von Vorteil, daß der Sender und der Empfänger gemeinsam über eine Aufnahme und der Reflektor unabhängig davon und mit Abstand dazu über eine weitere Aufnahme auf dem Bauteil in einem gemeinsamen Gehäuse angeordnet sind.

Weitere Vorteile und Einzelheiten der Erfindung sind in den Patentansprüchen und in der Beschreibung erlautert und in den Figuren dargestellt. Es zeigt:
- Figur 1: eine Schnittdarstellung des Aufnehmers von der Seite am unbelasteten Bauteil,
- Figur 2: eine Schnittdarstellung des Aufnehmers von der Seite am belasteten Bauteil,
- Figur 3: einen Empfänger in der Ansicht von vorne,
- Figur 4: eine Schnittdarstellung des Aufnehmers als Bohrkern,
- Figur 5: eine Schnittdarstellung des Aufnehmers mit einer Schraubverbindung zum Bauteil,
- Figur 6: die Schnittdarstellung A-A gemäß Figur 5,
- Figur 7: die Darstellung gemäß Figur 1 mit mehrfach gespiegeltem Lichtstrahl,
- Figur 8: eine Schnittdarstellung einer Haltevorrichtung.

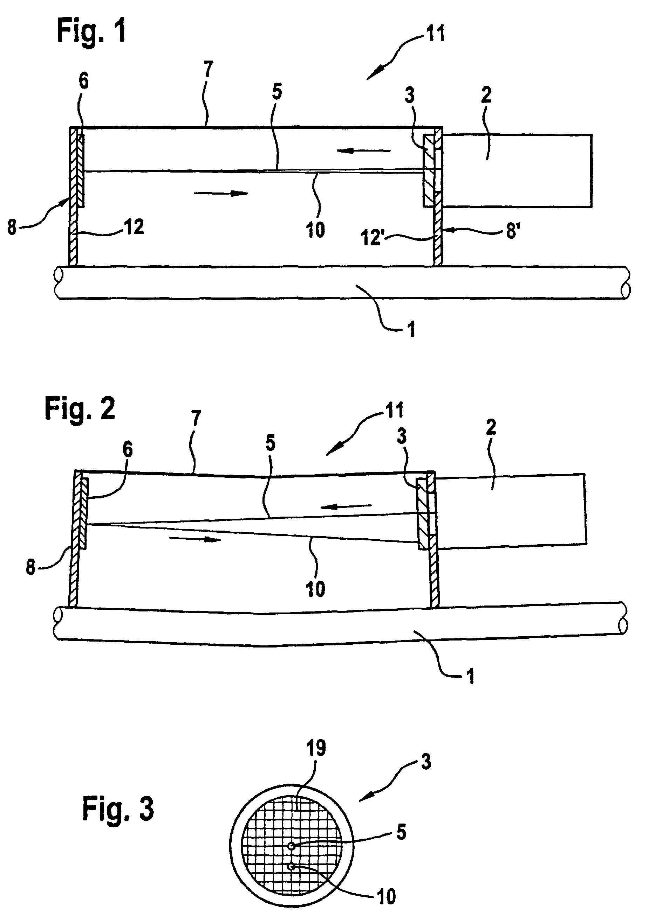

In Figur 1 ist mit 1 ein Bauteil bezeichnet, an dessen Seite bzw. Seitenfläche ein Belastungs- bzw. Verformungsaufnehmer 11 angeordnet ist. Dieses Bauteil kann eine Gleisschiene, eine Achse oder ein Träger sein. Der Verformungsaufnehmer 11 kann hierbei an das Bauteil geklemmt, geschraubt oder geklebt sein.

Der Aufnehmer 11 ist an seiner rechten Gehäuseseite 8' mit einem Sender 2 und einem Empfänger 3 ausgestattet. Der Sender 2 emittiert einen Licht- bzw. Laserstrahl 5 zu einer linken Gehäuseseite 8 hin, wo er auf einen Reflektor 6 auftrifft und reflektiert wird. Ein reflektierter Lichtstrahl 10 trifft dann auf den senderseitig vorgesehenen Empfänger 3. Je nach Grad der Parallelität von Sender 2 und Reflektor 6 ist der gesendete Lichtstrahl 5 mit dem reflektierten Lichtstrahl 10 identisch bzw. weicht gemäß Figur 1 etwas ab, d. h. ein Austrittspunkt 13 des gesendeten Lichtstrahls und ein Auftreffpunkt 14 des reflektierten Lichtstrahls weisen einen geringfügigen Abstand auf. Diese Position wird nun als Referenz für alle weiteren Belastungszustände des Bauteils gewählt. Mit der Verformung des Bauteils wird auch die der Verformung zugrunde liegende Kraft ermittelt, wie z. B. das Gewicht eines Güterzugs.

Sowohl die Sender-Empfänger-Einheit auf der rechten Seite als auch der Reflektor 6 auf der linken Seite sind jeweils über eine Aufnahme 12, 12' mit dem Bauteil 1 fest verbunden.

Beide Aufnahmen 12, 12' sind mit einem gemeinsamen flexiblen Gehäuse 7 umgeben, das den Aufnehmer gegen äußere Einflüsse abschottet und die Bewegungsfreiheit beider Seiten bei einer Bauteilverformung gemäß Figur 2 gewährleistet.

In Figur 2 ist das Bauteil aufgrund einer äußeren Belastung verformt dargestellt. Die linke und die rechte Aufnahme 12, 12' sind somit entsprechend der Verformung geneigt zueinander positioniert. Das hat zur Folge, daß der Einfallwinkel des gesendeten Licht- bzw. Laserstrahls 5 und der Ausfallwinkel des reflektierten Laserstrahls 10 sich von der Referenzstellung gemäß Figur 1 unterscheiden bzw. der Austrittspunkt 13 des gesendeten Laserstrahls und der Auftreffpunkt 14 des reflektierten Laserstrahls einen zur Referenzstellung abweichenden Abstand aufweisen.

Figur 3 zeigt den Empfänger 3 mit dem austretenden Laserstrahl 5 bzw. den Austrittspunkt 13 sowie den Auftreffpunkt 14 des reflektierten Laserstrahls. Der Empfänger ist kreisrund ausgebildet und weist eine lichtempfindliche Fläche 19 auf, mittels dessen die Position des auftreffenden Laserstrahls bestimmt wird.

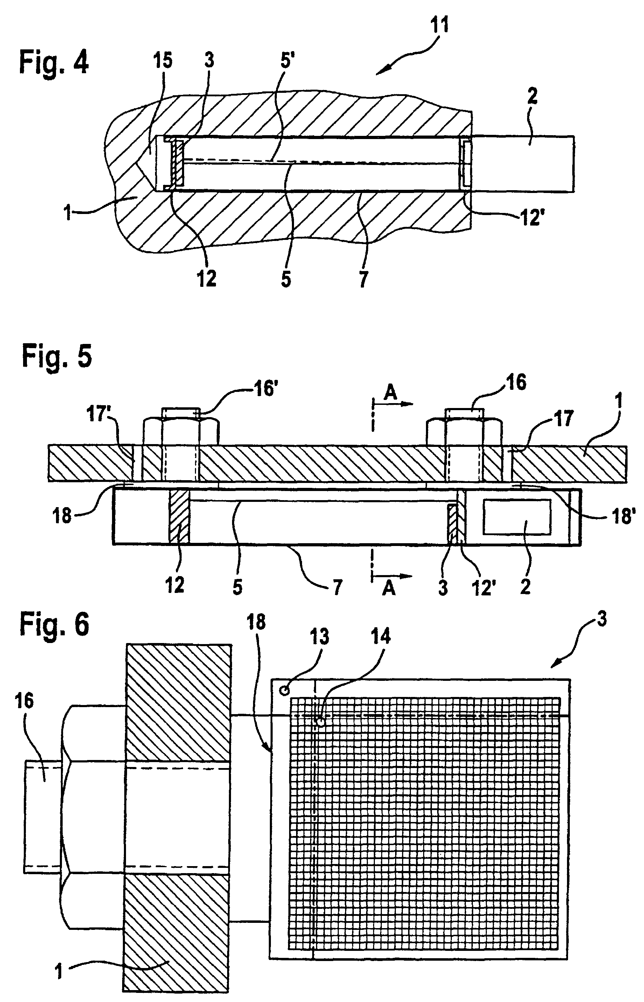

Figur 4 zeigt den Aufnehmer in Form eines Bohrkerns, d. h. er wird in eine im zu prüfenden Bauteil vorgesehene Bohrung 15 geführt. Durch die an beiden Seiten vorgesehene Aufnahme 12, 12' wirkt sich die im Bauteil durch äußere Belastung hervorgerufene Verformung auf den Aufnehmer bzw. auf die Parallelität von Empfänger 3 und Reflektor 6 aus. Das Gehäuse 7 gewährleistet die zum Einführen des Aufnehmers 11 notwendigen Führungseigenschaften, so daß Parallelität von Empfänger 3 und Reflektor 6 im Referenzzustand nahezu gewährleistet ist. Der Sender 2 ist in diesem Ausführungsbeispiel gegenüber dem Empfänger 3 angeordnet. Im Fall der Bauteilverformung wird der Lichtstrahl 5 von seiner Referenzposition abgelenkt. Ein abgelenkter Lichtstrahl 5' trifft somit auf eine von der Referenzposition abweichende Position auf den Empfänger 3 auf, und die Bauteilverformung kann ermittelt werden.

Figur 5 zeigt eine weitere Möglichkeit der Anordnung bzw. Befestigung des Aufnehmers 11 am Bauteil 1. Beide Aufnahmen 12, 12' weisen hierzu jeweils eine feste Verbindung 18, 18' zu einem Schraubenbolzen 16, 16' auf. Die Schraubenbolzen 16, 16' sind mit dem Bauteil 1 verschraubt bzw. in dieses eingedreht. Das Gehäuse 7 umgibt den Sender 2 und den Empfänger 3. Die Festigkeit bzw. der Formschluß zwischen Schraubenbolzen 16, 16' und Bauteil 1 wird durch eine Stiftverbindung 17, 17' gewährleist, die eine Torsion um die Mittelachse des jeweiligen Schraubenbolzens verhindert.

Figur 6 zeigt den Schnitt A-A gemäß Figur 5. Der Empfänger 3 ist rechteckförmig ausgebildet, wobei der Sender 2 am Rand im Bereich einer Ecke bzw. links oben angeordnet ist und der reflektierte Laserstrahl 10 im Referenzzustand ebenfalls im Bereich dieser Ecke auftrifft, d. h. der Austrittspunkt 13 und Auftreffpunkt 14 des Laserstrahls sind beide im Bereich einer Ecke der rechteckförmigen Sender-Empfänger-Einheit 2, 3 angeordnet.

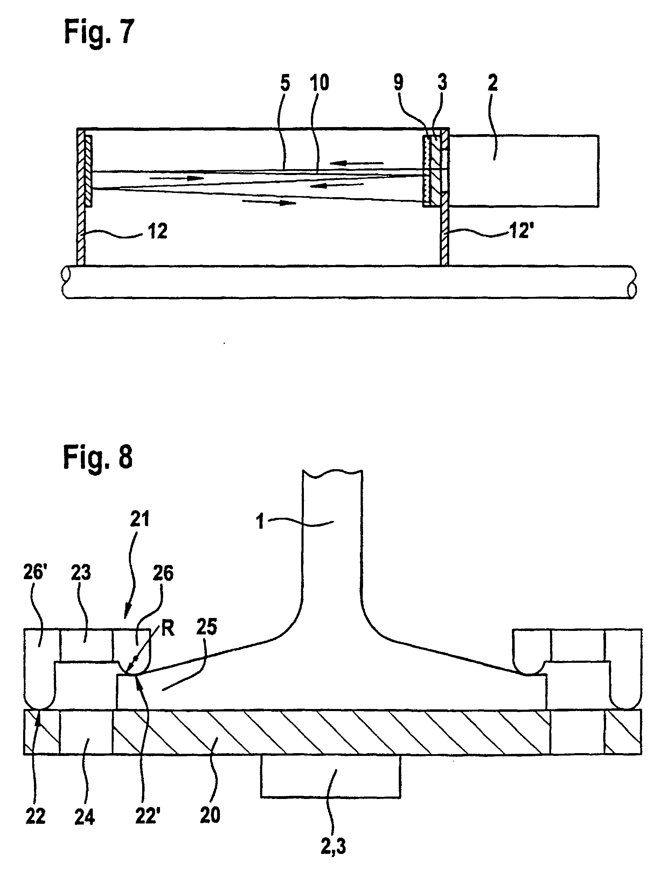

Gemäß Figur 7 ist es auch möglich, eine semitransparente Schicht 9 vor dem Empfänger 3 anzubringen, die den reflektierten Laserstrahl 10 zu einem Teil durchläßt, d. h. mit einem Teil seiner Intensität trifft der Laserstrahl auf den Empfänger auf, und mit dem übrigen Teil seiner Intensität wird er noch einmal in Richtung des Reflektors 6 reflektiert, der ihn dann ein zweites Mal auf den Empfänger 3 auftreffen läßt.

In Figur 8 ist mit 1 eine Gleisschiene bezeichnet, die über eine Platte 20 und zwei brückenförmige bzw. U-förmige Klemmelemente 21 mit dem Sender 2 und dem Empfänger 3 verbunden ist. Die Platte 20 weist hierzu im Bereich beider Enden mindestens eine Bohrung 24 auf, die koaxial zu einer Bohrung 23 des jeweiligen Klemmelements 21 angeordnet ist. Das Klemmelement 21 weist zudem zwei halbrunde Anlageteile 22, 22' auf, die gegen die Platte 20 sowie gegen die Gleisschiene 1 linienförmig anliegen. Auf der unteren Seite der Platte sind der Sender 2 und der Empfänger 3 angeordnet. Das Klemmelement 21 sitzt hierbei mit einem kurzen Schenkel 26 auf einem Fuß 25 der Gleisschiene 1 und mit einem langen Schenkel 26' auf der Platte 20 auf. Damit wird die Platte 20 mit der Gleisschiene 1 zur Anlage gebracht, und eine Verformung der Gleisschiene kann erfasst werden.

### Bezugszeichenliste

- 1: Bauteil, Gleisschiene
- 2: Sender, Laser
- 3: Empfänger
- 4: Auswerteeinheit
- 5: Lichtstrahl, Laserstrahl
- 5': abgelenkter Lichtstrahl
- 6: Reflektor, Reflexionsfläche
- 7: Gehäuse
- 8: linke Gehäuseseite
- 8': rechte Gehäuseseite
- 9: semitransparente Schicht
- 10: reflektierter Licht- bzw. Laserstrahl
- 11: Aufnehmer
- 12: linke Aufnahme
- 12': rechte Aufnahme
- 13: Austrittspunkt Laser
- 14: Auftreffpunkt Laser
- 15: Bohrung
- 16: Schraubenbolzen
- 16': Schraubenbolzen
- 17: Stiftverbindung
- 17': Stiftverbindung
- 18: Verbindung
- 18': Verbindung
- 19: lichtempfindliche Fläche, PSD-Aufnehmer
- 20: Platte
- 21: Klemmelement
- 22: Anlageteil
- 22': Anlageteil
- 23: Bohrung
- 24: Bohrung
- 25: Schienenfuß
- 26: kurzer Schenkel von 21
- 26': langer Schenkel von 21

## Patentansprüche

1. Vorrichtung zum Erfassen verschiedener Zustände wie Verformungszustände, Belastungszustände und Bewegungen eines Bauteils (1) mit einem einen Lichtstrahl (5) zu einem Empfänger (3) emittierenden Sender (2), der Empfänger (3) und der Sender (2) unabhängig voneinander beabstandet an dem Bauteil (1) angeordnet sind, der Empfänger (3) eine lichtempfindliche Fläche wie einen PSD-Aufnehmer oder ein Bildverarbeitungselement bildet und die Vorrichtung eine Auswerteeinheit (4) aufweist, **dadurch gekennzeichnet, daß** der Sender (2) eine fokussierte oder punktförmige elektromagnetische Welle, eine fokussierte akustische Welle oder einen fokussierten Teilchenstrahl außerhalb des Bauteils (1) zu dem Empfänger (3) emittiert.

2. Vorrichtung nach Anspruch 1, **dadurch gekennzeichnet, daß** der Sender (2) und der Empfänger (3) über jeweils eine Aufnahme (12, 12') derart auf dem Bauteil (1) angeordnet sind, daß eine Verformung des Bauteils (1) äquivalent zur Positionsverschiebung der elektromagnetischen Welle oder des Lichtstrahls (5) auf dem Empfänger (3) darstellbar ist.

3. Vorrichtung nach Anspruch 1 oder 2, **dadurch gekennzeichnet, daß** innerhalb des Strahlengangs des Lichtstrahls (5) mindestens ein Reflektor oder eine Reflexionsfläche (6) angeordnet ist.

4. Vorrichtung nach einem der vorhergehenden Ansprüche, **dadurch gekennzeichnet, daß** der Lichtstrahl (5) über den Reflektor oder die Reflexionsfläche (6) zum Empfänger (3) hin gespiegelt wird.

5. Vorrichtung nach einem der vorhergehenden Ansprüche, **dadurch gekennzeichnet, daß** der Reflektor (6) über die Aufnahme (12) mit dem Bauteil (1) verbunden ist.

6. Vorrichtung nach einem der vorhergehenden Ansprüche, **dadurch gekennzeichnet, daß** die lichtempfindliche Fläche des Empfängers mindestens eine Auflösung von 1000 d aufweist.

7. Vorrichtung nach einem der vorhergehenden Ansprüche, **dadurch gekennzeichnet, daß** der Sender (2) mindestens einen Lichtstrahl (5) wie einen Laserstrahl emittiert.

8. Vorrichtung nach einem der vorhergehenden Ansprüche, **dadurch gekennzeichnet, daß** der Sender (2), der Empfänger (3) und der Reflektor (6) in einem flexiblen Gehäuse (7) angeordnet sind.

9. Vorrichtung nach einem der vorhergehenden Ansprüche, **dadurch gekennzeichnet, daß** der Sender (2) und der Empfänger (3) auf einer gemeinsamen Gehäuseseite (8') gegenüber dem Reflektor oder der Reflexionsfläche (6) angeordnet sind.

10. Vorrichtung nach einem der vorhergehenden Ansprüche, **dadurch gekennzeichnet, daß** mindestens eine semitransparente Schicht (9) innerhalb des Strahlengangs vom Sender (2) zum Empfänger (3) angeordnet ist.

11. Vorrichtung nach einem der vorhergehenden Ansprüche, **dadurch gekennzeichnet, daß** der Sender (2) und/oder der Empfänger (3) rund oder rechteckförmig ausgebildet ist.

12. Vorrichtung nach einem der vorhergehenden Ansprüche, **dadurch gekennzeichnet, daß** das Gehäuse (7) rund, rechteckförmig oder in Form eines Bohrkerns ausgebildet ist.

13. Vorrichtung nach einem der vorhergehenden Ansprüche, **dadurch gekennzeichnet, daß** dem Empfänger (3) oder dem PSD-Aufnehmer eine Auswertelogik zur Bestimmung der Verformung des Bauteils (1) zugeordnet ist.

14. Vorrichtung nach einem der vorhergehenden Ansprüche, **dadurch gekennzeichnet, daß** der Sender (2) und der Empfänger (3) gemeinsam über eine Aufnahme (12') oder über zwei verschiedene Aufnahmen (12, 12') und der Reflektor (6) unabhängig davon mit Abstand zum Sender über eine weitere Aufnahme auf dem Bauteil (1) in einem gemeinsamen Gehäuse (7) angeordnet sind.

15. Vorrichtung nach einem der vorhergehenden Ansprüche, **dadurch gekennzeichnet, daß** der Sender (2) und der Empfänger (3) gemeinsam auf einer Platte (20) angeordnet sind, die über mindestens ein Klemmelement (21) an dem Bauteil (1) geklemmt ist, wobei das Klemmelement (21) zwei spitze oder runde Anlageteile (22, 22') und mindestens eine mit der Platte (20) korrespondierende Bohrung (23) aufweist.

## Claims

1. An apparatus for recording various states such as deformation states, loading states and movements of a component (1) comprising an emitter (2) which emits a light beam (5) to a receiver (3), said receiver (3) and said emitter (2) are arranged independently of one another some distance apart on said component (1), the receiver (3) forms a light-sensitive surface such as a PDS receiver or an image-processing unit and the apparatus has an evaluation unit (4), **characterised in that** said emitter (2) emits a focussed or point-shaped electromagnetic wave, a focussed acoustic wave or a focussed particle beam outside said component (1) to said receiver (3).

2. The apparatus according to claim 1 **characterised in that** said emitter (2) and said receiver (3) are each arranged via a holder (12, 12') on said component (1) such that any deformation of the component equivalent to a positional shift of the electromagnetic wave or the light beam (5) can be displayed on said receiver (3).

3. The apparatus according to claim 1 or 2 **characterised in that** within the beam path of said light beam (5) there is at least one reflector or reflection surface (6).

4. The apparatus according to any one of the preceding claims **characterised in that** said light beam (5) is reflected via the reflector or the reflection surface (6) to said receiver (3).

5. The apparatus according to any one of the preceding claims **characterised in that** said reflector (6) is connected via said holder (12) to said component (1).

6. The apparatus according to any one of the preceding claims **characterised in that** the light-sensitive surface of the receiver has a resolution of at least 1000 d.

7. The apparatus according to any one of the preceding claims **characterised in that** said emitter (2) emits at least one light beam (5) such as a laser beam.

8. The apparatus according to any one of the preceding claims **characterised in that** said emitter (2), said receiver (3) and said reflector (6) are arranged in a flexible casing (7).

9. The apparatus according to any one of the preceding claims **characterised in that** said emitter (2) and said receiver (3) are arranged on a common casing side (8') opposite said reflector or said reflection surface (6).

10. The apparatus according to any one of the preceding claims **characterised in that** at least one semitransparent layer (9) is arranged inside the beam path from said emitter (2) to said receiver (3).

11. The apparatus according to any one of the preceding claims **characterised in that** said emitter (2) and/or said receiver (3) are constructed as round or rectangular.

12. The apparatus according to any one of the preceding claims **characterised in that** said casing (7) is constructed as round, rectangular or in the form of a drill core.

13. The apparatus according to any one of the preceding claims **characterised in that** said receiver (3) or said PCD receiver is assigned an evaluation logic to determine the deformation of said component (1).

14. The apparatus according to any one of the preceding claims **characterised in that** said emitter (2) and said receiver (3) are arranged jointly via a holder (12') or via two different holders (12, 12') and said reflector (6) is arranged independently thereof at a distance from said emitter via a further holder on said component (1) in a common casing (7).

15. The apparatus according to any one of the preceding claims **characterised in that** said emitter (2) and said receiver (3) are arranged jointly on a plate (20) which is clamped to said component (1) by means of at least one clamping element (21), wherein said clamping element (21) has at least two pointed or round contact sections (22, 22') and at least one hole (23) corresponding to said plate (20).

## Revendications

1. Dispositif de détection de différents états, comme des états de déformation, des états de charge et des mouvements d'une pièce de construction (1), comportant un émetteur (2) émettant un rayon lumineux (5) vers un récepteur (3), le récepteur (3) et l'émetteur (2) étant disposés écartés l'un de l'autre sur la pièce de construction (1), le récepteur (3) formant une surface photosensible comme un récepteur DSP ou un élément de traitement graphique et le dispositif présentant une unité d'exploitation (4), **caractérisé en ce que** l'émetteur (2) émet une onde électromagnétique focalisée ou de forme ponctuelle, une onde focalisée acoustique ou un rayon focalisé de particules hors de la pièce de construction (1) vers l'émetteur (3).

2. Dispositif selon la revendication 1, **caractérisé en ce que** l'émetteur (2) et le récepteur (3) sont disposés grâce à respectivement un support (12, 12') sur la pièce de construction (1) de manière à ce qu'une déformation de la pièce de construction (1) équivalente au décalage de la position de l'onde électromagnétique ou du rayon lumineux (5) puisse être représentée sur le récepteur (3).

3. Dispositif selon la revendication 1 ou 2, **caractérisé en ce qu'**à l'intérieur du parcours optique du rayon lumineux (5) est disposé au moins un réflecteur ou une surface réfléchissante (6).

4. Dispositif selon l'une quelconque des revendications précédentes, **caractérisé en ce que** le rayon lumineux (5) est renvoyé par le réflecteur ou la surface réfléchissante (6) vers le récepteur (3).

5. Dispositif selon l'une quelconque des revendications précédentes, **caractérisé en ce que** le réflecteur (6) est relié grâce au support (12) à la pièce de construction (1).

6. Dispositif selon l'une quelconque des revendications précédentes, **caractérisé en ce que** la surface photosensible du récepteur présente au moins une définition de 1000 d.

7. Dispositif selon l'une quelconque des revendications précédentes, **caractérisé en ce que** l'émetteur (2) émet au moins un rayon lumineux (5) comme un rayon laser.

8. Dispositif selon l'une quelconque des revendications précédentes, **caractérisé en ce que** l'émetteur (2), le récepteur (3) et le réflecteur (6) sont disposés dans un boîtier souple (7).

9. Dispositif selon l'une quelconque des revendications précédentes, **caractérisé en ce que** l'émetteur (2) et le récepteur (3) sont disposés sur un côté commun du boîtier (8') en face du réflecteur ou de la surface réfléchissante (6).

10. Dispositif selon l'une quelconque des revendications précédentes, **caractérisé en ce qu'**au moins une couche semi-transparente (9) est disposée à l'intérieur du parcours optique allant de l'émetteur (2) au récepteur (3).

11. Dispositif selon l'une quelconque des revendications précédentes, **caractérisé en ce que** l'émetteur (2) et/ou le récepteur (3) ont une conformation ronde ou rectangulaire.

12. Dispositif selon l'une quelconque des revendications précédentes, **caractérisé en ce que** le boîtier (7) a une conformation ronde, rectangulaire ou en forme de noyau alésé.

13. Dispositif selon l'une quelconque des revendications précédentes, **caractérisé en ce qu'**est associée au récepteur (3) ou au récepteur DSP une logique d'exploitation pour déterminer la déformation de la pièce de construction (1).

14. Dispositif selon l'une quelconque des revendications précédentes, **caractérisé en ce que** l'émetteur (2) et le récepteur (3) sont disposés ensemble grâce à un support (12') ou à deux supports différents (12, 12') et le réflecteur (6) indépendamment de cela à distance de l'émetteur grâce à un autre support sur la pièce de construction (1) dans un boîtier commun (7).

15. Dispositif selon l'une quelconque des revendications précédentes, **caractérisé en ce que** l'émetteur (2) et le récepteur (3) sont disposés ensemble sur une plaque (20) qui est fixée grâce à au moins un élément de blocage (21) sur la pièce de construction (1), l'élément de blocage (21) présentant deux pièces de contact pointues ou rondes (22, 22') et au moins un alésage (23) correspondant à la plaque (20).
